# FASCICULE DE BREVET EUROPEEN

(11) **EP 4 016 818 B1**
(45) Date de publication et mention de la délivrance du brevet: **02.04.2025**
(21) Numéro de dépôt: 21213284.9
(22) Date de dépôt: 09.12.2021
(51) Int. Cl.: H02K 15/03, H02K 15/12, H02K 1/276

(54) **ROTOR DE MACHINE ELECTRIQUE TOURNANTE ET MACHINE ELECTRIQUE TOURNANTE EQUIPEE D'UN TEL ROTOR**
ROTOR EINER UMLAUFENDEN ELEKTRISCHEN MASCHINE UND MIT EINEM SOLCHEN ROTOR AUSGESTATTETE ELEKTRISCH UMLAUFENDE MASCHINE
ROTOR OF A ROTATING ELECTRIC MACHINE AND ROTATING ELECTRIC MACHINE EQUIPPED WITH SUCH A ROTOR

(30) Priorité: 17.12.2020 FR 2013584
(43) Date de publication de la demande: 22.06.2022
(73) Titulaire: Valeo Electrification, 95800 Cergy (FR)
(72) Inventeur: MECHIN, Olivier, 94046 Créteil Cedex (FR); ODIN, Laurent, 38070 St Quentin Fallavier (FR); REBAI, Ahmed, 94046 Créteil Cedex (FR); CIAPIN, Aurelien, 38070 St Quentin Fallavier (FR); KEMPISTY, Krzysztof, 43500 Tchéquie (PL); DELIANNE, Henri, 62630 Étaples-sur-Mer (FR); EL GHAZAL, Mohamed, 62630 Étaples-sur-Mer (FR)
(74) Mandataire: Valeo Powertrain Systems

(56) Documents cités:
- FR-A1- 3 069 723
- US-A1- 2008 238 219
- US-A1- 2010 090 561
- US-A1- 2015 054 196

## Description

L'invention porte sur un rotor de machine électrique tournante comprenant des aimants permanents fixés à l'aide d'une résine. L'invention porte également sur une machine électrique tournante équipée d'un tel rotor.

Il est connu de la demande de brevet japonais JP2014222964A2 un rotor pour machine électrique tournante, apte à interagir avec un stator de la machine électrique tournante et en rotation par rapport à un axe de rotation, le rotor comprenant :
- un corps de rotor comprenant des premières cavités s'étendant d'une première extrémité du corps de rotor à une deuxième extrémité du corps de rotor dans la direction de l'axe de rotation,
- des aimants permanents se logeant dans les premières cavités, un espace de fixation étant formé entre au moins une première face d'au moins un des aimants permanents et une deuxième face de la première cavité dans laquelle il est logé,
- une résine insérée dans l'espace de fixation,

Dans ce type de rotor, les différents composant du rotor ne sont fixés entre eux que par l'utilisation de la résine de fixation des aimants permanents. Une telle fixation peut être insuffisante et un mouvement relatif entre les composants, notamment les tôles d'un empilement de tôle magnétique du rotor, peut survenir pendant le fonctionnement de la machine électrique tournante. Un tel mouvement peut entrainer une usure, du bruit et une dégradation de la machine électrique. De plus le rotor ne comprenant pas de flasque à ces extrémités, son équilibrage est difficile. Un usinage des tôles de l'empilement de tôles peut être nécessaire. Cet usinage peut entrainer une dégradation des performances de la machine électrique tournante.

Il est connu de la demande de brevet américaine US2017/0085160A1 un rotor pour machine électrique tournante, apte à interagir avec un stator de la machine électrique tournante et en rotation par rapport à un axe de rotation, le rotor comprenant :
- un corps de rotor comprenant :
   - des premières cavités s'étendant d'une première extrémité du corps de rotor à une deuxième extrémité du corps de rotor dans la direction de l'axe de rotation,
   - des troisièmes cavités s'étendant d'une première extrémité du corps de rotor à une deuxième extrémité du corps de rotor dans la direction de l'axe de rotation et ayant un axe parallèle à l'axe de rotation,
- des aimants permanents se logeant dans les premières cavités,
- un premier ensemble de maintien en appui sur la première extrémité du corps de rotor et comprenant des trous,
- un deuxième ensemble de maintien en appui sur la deuxième extrémité du corps de rotor,
- des tirants, passant dans les deuxièmes cavités et dans les trous du premier ensemble de maintien, permettant d'enserrer le corps de rotor entre le premier ensemble de maintien et le deuxième ensemble de maintien.

Dans ce type de rotor les aimants permanents ne sont pas fixés dans les premières cavités. Ils peuvent notamment avoir un mouvement dans une direction radiale et circonférentielle. En effet le premier ensemble de maintien et le deuxième ensemble de maintien ne peut que limiter les déplacements des aimants permanents dans la direction de l'axe de rotation. Cette possibilité de mouvement des aimants permanents entraine des difficultés d'équilibrage du rotor et un risque de bruit pendant le fonctionnement de la machine électrique tournante.

La demande de brevet américaine US20080238219A1 divulgue un rotor comprenant :
- un corps de rotor comprenant des premières cavités recevant des aimants, un espace de fixation étant formé entre les aimants et une face de la première cavité, et des troisièmes cavités,
- un premier et un deuxième ensembles de maintien enserrant le corps de rotor entre eux grâce à des tirants passant dans les troisièmes cavités,
une résine étant insérée dans l'espace de fixation par un passage d'alimentation.

La présente invention vise à résoudre tout ou partie de ces inconvénients. L'invention porte sur un rotor pour machine électrique tournante, apte à interagir avec un stator de la machine électrique tournante et en rotation par rapport à un axe de rotation, le rotor comprenant :
- un corps de rotor comprenant :
   - des premières cavités s'étendant d'une première extrémité du corps de rotor à une deuxième extrémité du corps de rotor dans la direction de l'axe de rotation,
   - des troisièmes cavités s'étendant d'une première extrémité du corps de rotor à une deuxième extrémité du corps de rotor dans la direction de l'axe de rotation et ayant un axe parallèle à l'axe de rotation,
- des aimants permanents se logeant dans les premières cavités, un espace de fixation étant formé entre au moins une première face d'au moins un des aimants permanents et une deuxième face de l'une des premières cavités dans laquelle l'au moins un aimant permanents est logé,
- un premier ensemble de maintien en appui sur la première extrémité du corps de rotor et comprenant des deuxièmes trous,
- un deuxième ensemble de maintien en appui sur la deuxième extrémité du corps de rotor,
- des tirants, passant dans les troisièmes cavités et dans les deuxièmes trous du premier ensemble de maintien, permettant d'enserrer le corps de rotor entre le premier ensemble de maintien et le deuxième ensemble de maintien,
- une résine insérée dans l'espace de fixation,
dans lequel le premier ensemble de maintien comprend un passage d'alimentation communiquant avec l'espace de fixation, le passage d'alimentation étant apte à recevoir un dispositif d'alimentation en résine.

Un tel type de rotor permet un bon maintien des aimants permanents dans leur cavité grâce à l'utilisation de résine tout en assurant la cohésion du rotor. Selon l'invention, le premier ensemble de maintien comprend un lamage ayant un fond, le fond comprenant le passage d'alimentation et une surface d'appui plane sur laquelle s'appuie le tirant,
le passage d'alimentation et la surface d'appui ayant un bord en commun. L'utilisation d'un tel passage d'alimentation ayant un bord en commun avec la surface d'appui sur laquelle s'appuie le tirant permet de réduire l'encombrement du passage d'alimentation. En effet grâce à cette caractéristique il n'y a pas, dans un plan perpendiculaire à l'axe de rotation, de matière du premier ensemble de maintien entre une partie du tirant en appui sur la surface d'appui plane et le passage d'alimentation. Il est ainsi possible d'augmenter la taille des zones hors lamage et passage d'alimentation du premier ensemble de maintien. Ces zones peuvent alors être plus épaisses. Elles peuvent alors être utilisées pour faire un équilibrage par enlèvement de matière du rotor et ainsi réduire les vibrations lors du fonctionnement de la machine électrique tournante.

Selon une caractéristique supplémentaire de l'invention, le deuxième ensemble de maintien comprend des troisièmes trous dans lesquels passent les tirants.

Selon une caractéristique supplémentaire de l'invention le passage d'alimentation étant inscrit entre un premier plan et un deuxième plan formant un secteur angulaire, le premier plan et le deuxième plan passant par l'axe de rotation, l'un des deuxièmes trous est situé dans le secteur angulaire.

Cette disposition permet de d'obtenir des zones plus épaisses angulairement entre les tirant et les passages d'alimentation. Ces zones plus épaisses permettent d'augmenter la rigidité du premier ensemble de maintien. Ces zones plus épaisses peuvent aussi être utilisées pour faire un équilibrage par enlèvement de matière du rotor.

Selon une caractéristique supplémentaire de l'invention, le passage d'alimentation étant inscrit entre un premier plan et un deuxième plan formant un secteur angulaire, le premier plan et le deuxième plan passant par l'axe de rotation, l'un des deuxièmes trous ayant un axe, l'axe est situé dans le secteur angulaire.

Cette disposition permet également de d'obtenir des zones plus épaisses angulairement entre les tirant et les passages d'alimentation. Ces zones plus épaisses permettent d'augmenter la rigidité du premier ensemble de maintien. Ces zones plus épaisses peuvent aussi être utilisées pour faire un équilibrage par enlèvement de matière du rotor.

Selon une caractéristique supplémentaire de l'invention, le passage d'alimentation communique avec plusieurs espaces de fixations, notamment deux.

L'utilisation d'un tel passage d'alimentation permet l'utilisation d'un passage plus large et permet donc de faciliter le flux de la résine lors de son insertion. En effet il est ainsi possible de supprimer des séparations entre les passages d'alimentation et donc d'avoir des passages alimentation plus gros sans augmenter l'encombrement global des passages d'alimentation dans le premier ensemble de maintien.

Selon une caractéristique supplémentaire de l'invention, le premier ensemble de maintien comprend un évent communiquant avec l'espace de fixation et apte à permettre l'évacuation d'un gaz lors de l'insertion de la résine, le passage d'alimentation et l'évent étant distincts.

L'utilisation d'un tel évent permet de faciliter le remplissage de la résine dans l'espace de fixation en facilitant l'évacuation du gaz, notamment l'air atmosphérique, occupant l'espace de fixation avant l'insertion de la résine. La formation de bulle dans la résine est également réduite. La fixation des aimants permanents est ainsi améliorée. Les aimants permanents étant bien fixés, l'équilibrage du rotor est facilité.

Selon une caractéristique supplémentaire de l'invention, les tirants comprennent un élément de fixation, l'élément de fixation étant en appui sur la surface d'appui.

Selon une caractéristique supplémentaire de l'invention, le tirant est une vis et l'élément de fixation est une tête de la vis, la tête de la vis étant en appui sur la surface d'appui.

Selon une caractéristique supplémentaire de l'invention le tirant comprend une vis et l'élément de fixation est un écrou, l'écrou étant en appui sur la surface d'appui.

L'invention porte également sur une machine électrique tournante comprenant un rotor tel que décrit précédemment et un stator.

Dans tout ce qui précède, le rotor peut comprendre un nombre de paires de pôles quelconque, par exemple six ou huit paires de pôles.

Dans tout ce qui précède, la machine électrique tournante peut avoir un stator ayant un bobinage électrique polyphasé, par exemple formé par des fils ou par des barres conductrices reliées les unes les autres.

La machine électrique tournante peut comprendre un composant électronique de puissance, apte à être connecté au réseau de bord d'un véhicule. Ce composant électronique de puissance comprend par exemple un onduleur/redresseur permettant, selon que la machine électrique tournante fonctionne en moteur ou en génératrice, de charger un réseau de bord du véhicule ou d'être électriquement alimenté depuis ce réseau.

La machine électrique tournante peut encore comprendre une poulie ou tout autre moyen de liaison vers le reste d'un groupe motopropulseur du véhicule. La machine électrique tournante est par exemple reliée, notamment via une courroie, au vilebrequin d'un moteur thermique du véhicule. En variante, la machine électrique tournante est reliée à d'autres emplacement du groupe motopropulseur, par exemple à l'entrée d'une boîte de vitesses du point de vue du couple transitant vers les roues du véhicule, en sortie de la boîte de vitesses du point de vue du couple transitant vers les roues du véhicule, au niveau de la boîte de vitesses du point de vue du couple transitant vers les roues du véhicule, ou encore sur le train avant ou le train arrière de ce groupe motopropulseur.

L'invention pourra être mieux comprise à la lecture de la description qui va suivre d'exemples non limitatifs de mise en œuvre de celle-ci et à l'examen du dessin annexé sur lequel :
- la figure 1 représente une vue partielle schématique en coupe d'une machine électrique tournante,
- la figure 2 représente une vue schématique d'un rotor de machine électrique tournante selon un premier mode de réalisation de l'invention,
- la figure 3 représente une vue partielle schématique du rotor de la figure 2,
- la figure 4 représente un détail de la vue de la figure 3,
- la figure 5 représente une vue schématique d'un premier ensemble de maintien du rotor de la figure 2,
- la figure 6 représente une vue schématique d'un deuxième ensemble de maintien du rotor de la figure 2,
- la figure 7 représente un détail d'une vue selon un plan perpendiculaire à un axe de rotation du rotor de la figure 2,
- la figure 8 représente une vue partielle en coupe du rotor de la figure 2,
- la figure 9 représente une vue partielle en coupe d'un rotor selon un deuxième mode de réalisation,
- la figure 10 représente une autre vue schématique du premier ensemble de maintien de la figure 5,
- la figure 11 représente un détail du premier ensemble de maintien de la figure 5.

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

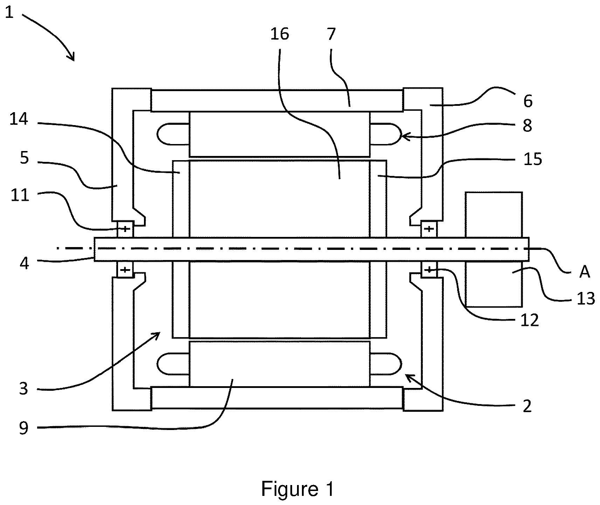

La figure 1 représente une vue partielle schématique en coupe d'une machine électrique tournante 1 ayant un axe de rotation A. La machine électrique tournante 1 comprend un stator 2 et un rotor 3 dans un carter. Le rotor 3 est apte à interagir avec le stator 2. Le carter comprend par exemple un premier palier 5, un deuxième palier 6 et une entretoise tubulaire 7. L'entretoise tubulaire 7 est par exemple enserrée entre le premier palier 5 et le deuxième palier 6, par exemple grâce à des tirants non représentés entre le premier palier 5 et le deuxième palier 6. Le stator est fixé à l'intérieur du carter, par exemple monté serré dans l'entretoise tubulaire 7.

Au sens de l'invention, sauf en cas de précision contraire, les termes radial et radialement s'entendent par rapport à l'axe de rotation A. Au sens de l'invention, sauf en cas de précision contraire, les termes longitudinal et longitudinalement signifient dans la direction de l'axe de rotation A.

Dans un mode de réalisation non représenté de l'invention, l'entretoise tubulaire comprend une chambre de refroidissement dans laquelle circule un liquide de refroidissement.

Dans un mode de réalisation non représenté de l'invention, il n'y a pas d'entretoise tubulaire et le stator est enserré entre le premier palier et le deuxième palier.

Le stator comprend un corps de stator 9 et un bobinage 8. Le corps de stator 9 comprend par exemple un premier empilage de tôles magnétiques. Par exemple le bobinage 8 comprend des conducteurs électriques dont une partie active passe dans des encoches formées dans le corps de stator 9 et une partie de connexion ou chignon est formée à l'extérieur des encoches. Le bobinage 8 est par exemple un bobinage de type en épingles.

Le rotor 3 est par exemple fixé sur un arbre 4 d'axe de rotation A. L'arbre 4 est guidé en rotation par un premier roulement 11 monté dans le premier palier 5 et un deuxième roulement 12 monté dans le deuxième palier 6. Un élément d'entrainement 13, par exemple une poulie ou un engrenage est fixé à l'arbre 4.

Dans un autre mode de réalisation non représenté, l'arbre 4 est guidé en rotation par rapport au premier palier et au deuxième palier grâce à d'autres moyens de guidage en rotation connus, par exemple des paliers lisses.

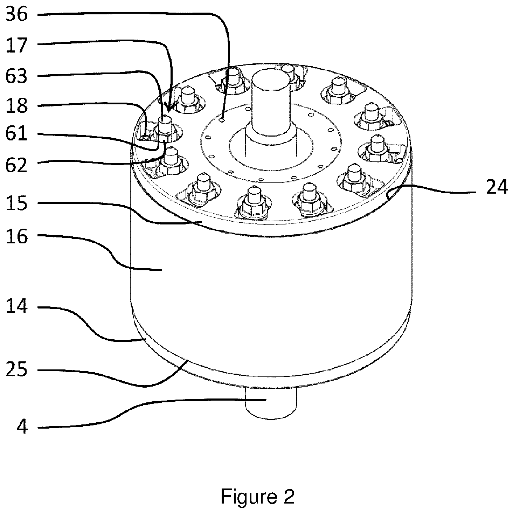

La figure 2 représente le rotor 3 selon un premier mode de réalisation et l'arbre 4. Le rotor 3 comprend un corps de rotor 16. Le corps de rotor 16 s'étend longitudinalement d'une première extrémité 24 du corps de rotor 16 à une deuxième extrémité 25 du corps de rotor 16.

Le rotor 3 comprend en outre un premier ensemble de maintien 15 en appui sur la première extrémité 24 du corps de rotors 16. Le rotor 3 comprend également un deuxième ensemble de maintien 14 en appui sur la deuxième extrémité 25 du corps de rotor 16. Le corps de rotor 16 est alors enserré entre le premier ensemble de maintien 15 et le deuxième ensemble de maintien 14.

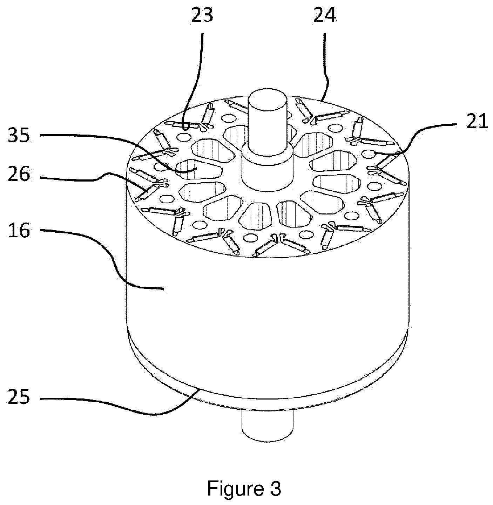

La figure 3 est une vue partielle du rotor 3 et de l'arbre 4. Sur la figure 3, le premier ensemble de maintien 15 n'est pas représenté pour permettre une vue plus détaillée des autres composants du rotor 3.

Des premières cavités 23, par exemple longitudinale, sont formées dans le corps de rotor 16. Le corps de rotor 16 comprend par exemple un deuxième empilage de tôles magnétiques. Le rotor 3 comprend en outre des aimants permanents 26, par exemple longitudinaux, se logeant dans les première cavités 23.

Dans les modes de réalisation de l'invention représentés sur les figures, les aimants permanents 26 comprennent une pluralité d'aimants permanents élémentaires.

Dans un autre mode de réalisation de l'invention non représenté, les aimants permanents comprennent un seul aimant permanent élémentaire.

Un espace de fixation 29 est formé entre au moins une première face 28 d'au moins un des aimants permanents 26 et une deuxième face 27 de l'une des premières cavités 23 dans laquelle l'au moins un aimant permanent 26 est logé. Une résine 64 est insérée dans l'espace de fixation. La résine n'est pas représentée sur les figures 1 à 10 pour améliorer la lisibilité de ces figures. La résine 64 participe à la fixation des aimants permanents 26 dans les premières cavités 23 du corps de rotor 16.

Dans les modes de réalisation de l'invention représentés sur les figures le rotor 3 comprend des pôles magnétiques formés par deux aimants permanents formant une forme en V dans un plan orthogonal à l'axe de rotation.

Dans un autre mode de réalisation de l'invention non représenté, les pôles magnétiques du rotor sont formés par trois aimants permanents formant une forme de U dans un plan orthogonal à l'axe de rotation.

Dans un autre mode de réalisation de l'invention non représenté, les pôles magnétiques du rotor sont formés par un aimant en forme de U dans un plan orthogonal à l'axe de rotation.

Dans un autre mode de réalisation de l'invention non représenté, les pôles magnétiques du rotor sont formés par des aimants à magnétisation radiale.

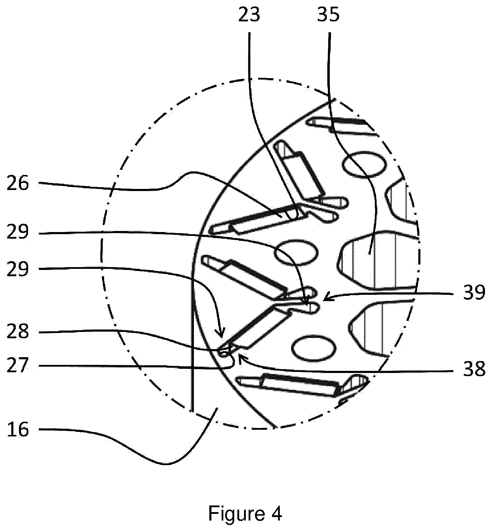

La figure 4 représente un détail de la figure 3 sur lequel est visible l'espace de fixation 29.

L'espace de fixation 29 peut comprendre un premier logement 38 et un deuxième logement 39.

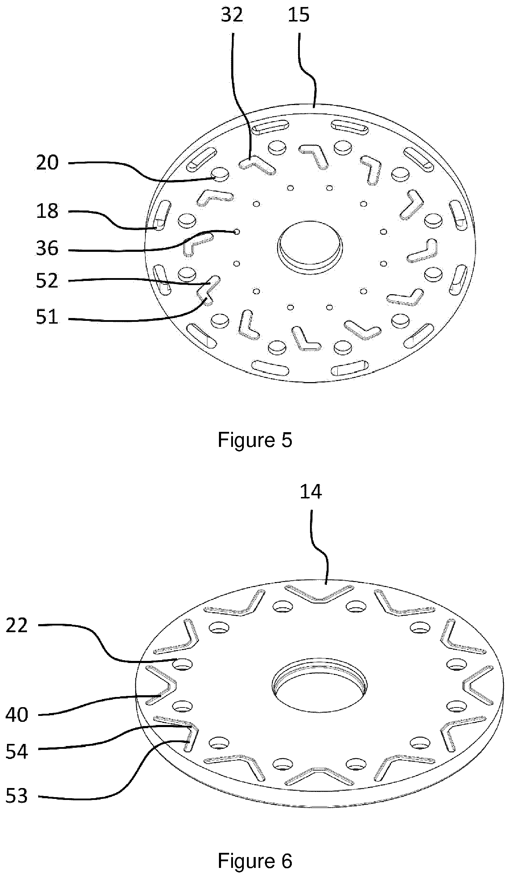

La figure 5 représente le premier ensemble de maintien 15 du rotor 3. Le premier ensemble de maintien 15 comprend un passage d'alimentation 18 communiquant avec l'espace de fixation 29. Le passage d'alimentation 18 est apte à recevoir un dispositif d'alimentation en résine. Le dispositif d'alimentation en résine comprend par exemple une aiguille creuse pénétrant dans le passage d'alimentation 18 lors de l'insertion de la résine 64. La résine 64 est par exemple insérée sous forme liquide puis polymérisée l'aide d'un dispositif chauffant.

Le premier ensemble de maintien peut comprendre en outre un évent 32 communiquant avec l'espace de fixation 29. L'évent 32 permet l'évacuation d'un gaz, notamment l'air atmosphérique, lors de l'insertion de la résine 64. Le passage d'alimentation 18 et l'évent 32 sont par exemple distincts.

Le passage d'alimentation 18 peut communiquer avec plusieurs espaces de fixations 29. Par exemple, dans les modes de réalisation représentés sur les figure, le passage d'alimentation 18 communique avec deux espaces de fixation 29.

L'évent 32 peut comprendre un premier passage 34 formé dans le premier ensemble de maintien 15. Le premier passage 34 comprend par exemple une première gorge 37 formée dans le premier ensemble de maintien 15. La première gorge 37 est par exemple usinée dans le premier ensemble de maintien 15.

Le premier passage 34 comprend une première extrémité 30 qui débouche par exemple dans l'espace de fixation 29.

Le corps de rotor 16 peut comprendre une deuxième cavité 35, par exemple une cavité longitudinale située radialement à l'intérieur des premières cavités 23. Le premier passage 34 peut comprendre une deuxième extrémité 31 débouchant dans la deuxième cavité 35.

L'évent 32 peut comprendre en outre un premier trou 36 traversant le premier ensemble de maintien 15. Le premier trou 36 peut déboucher dans la deuxième cavité 35.

Dans un autre mode de réalisation de l'invention non représenté, l'évent comprend également un premier trou et la deuxième extrémité du premier passage débouche directement dans le premier trou.

Dans un autre mode de réalisation de l'invention non représenté, un premier espace, par exemple annulaire est formé entre l'arbre et le premier ensemble de maintien. La deuxième extrémité du premier passage débouche dans le premier espace.

L'évent 32 peut communiquer avec plusieurs espaces de fixation 29. Dans les modes de réalisation de l'invention représentés sur les figures l'évent 32 communique avec deux espaces de fixation 29. Par exemple le premier passage 34 comprend une première portion 51 d'orientation circonférentielle par rapport à l'axe de rotation A et une deuxième portion 52 de liaison avec la deuxième cavité 35. La première portion 51 relie par exemple deux espaces de fixation 29. La première portion 51 et la deuxième portion 52 sont reliées entre elles.

L'espace de fixation 29 peut comprendre un premier logement 38 et un deuxième logement 39. Le premier logement 38 et deuxième logement 39 sont par exemple formés en regard de deux premières faces 28 opposées d'un aimant permanent 26. Le passage d'alimentation 18 peut communiquer avec le premier logement 38 et l'évent 32 peut communiquer avec le deuxième logement 39.

La figure 6 représente le deuxième ensemble de maintien 14 du rotor 3 selon le premier mode de réalisation de l'invention. Le deuxième ensemble de maintien 14 peut comprendre un deuxième passage 40 reliant le premier logement 38 au deuxième logement 39.

Dans le premier mode de réalisation de l'invention, le deuxième passage 40 peut comprendre une deuxième gorge 41 formée dans le deuxième ensemble de maintien 14. La deuxième gorge est par exemple usinée dans le deuxième ensemble de maintien 14.

Le deuxième passage 40 peut également relier plusieurs espaces de fixation 29. Par exemple, dans les modes de réalisation de l'invention représentés sur les figures, le deuxième passage 40 relie deux espaces de fixations 29. Le deuxième passage 40 comprend par exemple une troisième portion 53 reliant le premier logement 38 au deuxième logement 39 ainsi qu'une quatrième portion 54 reliant deux troisième portions.

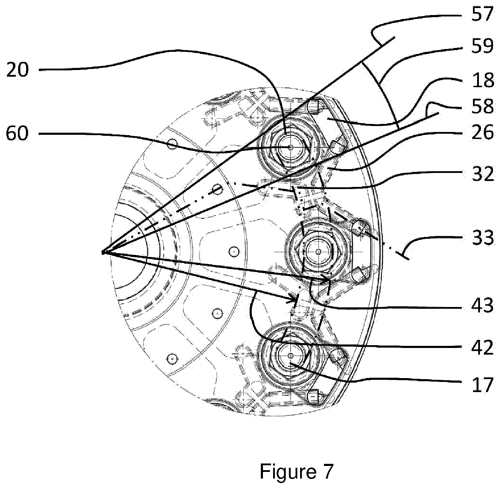

La figure 7 représente une vue de détail du rotor 3.

Le corps de rotor comprend des troisièmes cavités 21. Les troisièmes cavités 21 s'étendent de la première extrémité 24 du corps de rotor 16 à la deuxième extrémité 25 du corps de rotor 16 dans la direction de l'axe de rotation A. les troisièmes cavités 21 ont un axe parallèle à l'axe de rotation A. Les troisièmes cavités 21 s'étendent par exemple entre un premier rayon 42 et un deuxième rayon 43, le premier rayon 42 étant inférieur au deuxième rayon 43.

Le rotor comprend des tirants 17 passant dans les troisièmes cavités 21 et dans des deuxième trous 20 du premier ensemble de maintien 15. Les tirants 17 permettent d'enserrer le corps de rotor 16 entre le premier ensemble de maintien 15 et le deuxième ensemble de maintien 14.

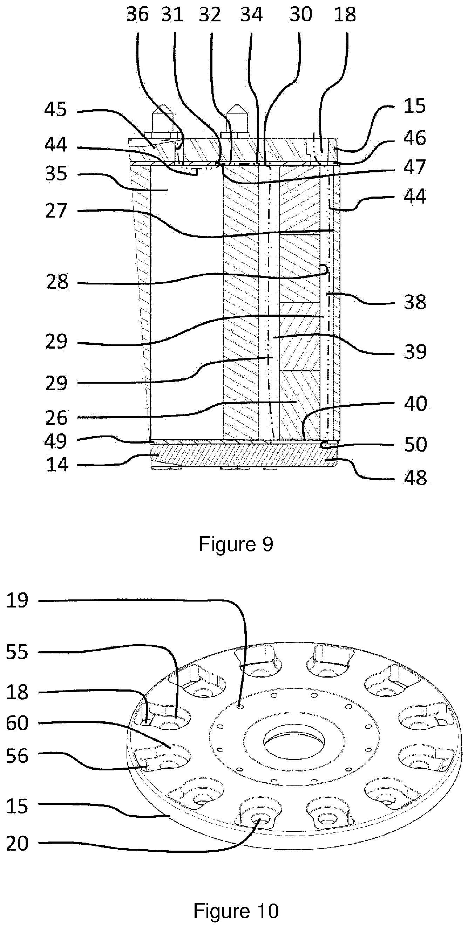

La figure 10 représente une vue du premier ensemble de maintien. Le premier ensemble de maintien peut comprendre un lamage 60 ayant un fond. Le fond peut comprendre une surface d'appui 55 plane sur laquelle s'appuie le tirant 17. Le passage d'alimentation 18 et la surface d'appui 55 peuvent avoir un bord 56 en commun.

Le passage d'alimentation 18 et le lamage 60 peuvent former un entonnoir ou une cuvette pour l'insertion de la résine 64.

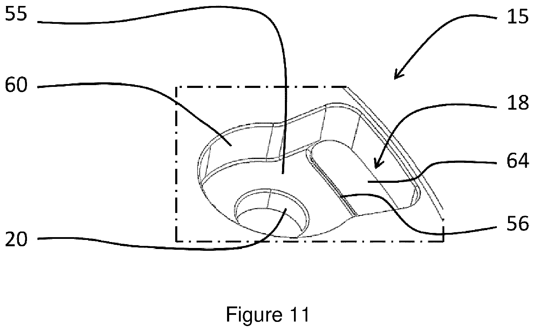

La figure 11 représente un détail du premier ensemble de maintien et en particulier le lamage 60 ainsi que le passage d'alimentation 18. De la résine 64 a été insérée dans le passage d'alimentation. Le passage d'alimentation 18 peut être utilisé comme un réservoir de résine 64 lors de l'insertion de la résine 64.

Comme représenté sur le figure 7, le passage d'alimentation 18 est inscrit entre un premier plan 57 et un deuxième plan 58 formant un secteur angulaire 59, le premier plan 57 et le deuxième plan 58 passant par l'axe de rotation A. L'un des deuxièmes trous 20 est par exemple situé dans le secteur angulaire 59.

L'un des deuxième trou 20 peut avoir un axe 60. L'axe 60 est situé dans le secteur angulaire 59.

Chacun des passages d'alimentation peut être inscrit dans un secteur angulaire 59. Les zones situées entre les secteurs angulaires 59 du premier ensemble de maintien peuvent par exemple être usinées pour équilibrer le rotor 3.

Les tirants peuvent également passer dans des troisièmes trous 22 du deuxième ensemble de maintien 14.

Les tirants comprennent par exemple un élément de fixation 61 notamment un élément de fixation 61 en appui sur la surface d'appui 55.

Dans un mode de réalisation non représenté de l'invention le tirant 17 peut être une vis et l'élément de fixation est une tête de la vis. La tête de la vis est par exemple en appui sur la surface d'appui 55. La vis peut comprendre une tige filetée. La tige de la vis est par exemple vissée dans le deuxième ensemble de maintien, le deuxième ensemble de maintien comprenant un troisième trou fileté ou par exemple un écrou surmoulé pour recevoir la tige filetée.

Dans les modes de réalisation représentés sur les figures, le tirant 17 comprend une vis 63 et l'élément de fixation est un écrou 62. L'écrou 62 est en appui sur la surface d'appui 55. L'écrou 62 est par exemple un écrou à embase. Dans un autre mode de réalisation non représenté de l'invention l'écrou 62 est en appui sur le surface d'appui 55 par l'intermédiaire d'une rondelle. La vis 63 peut comprendre une tête. La tête est par exemple en appui sur le deuxième ensemble de maintien. Dans un autre mode non représenté de l'invention, la tête de la vis est surmoulé dans le deuxième ensemble de maintien.

Le premier trou 36 et le passage d'alimentation 18 sont par exemple situés chacun radialement à l'intérieur du premier rayon 42 ou à l'extérieur du deuxième rayon 43.

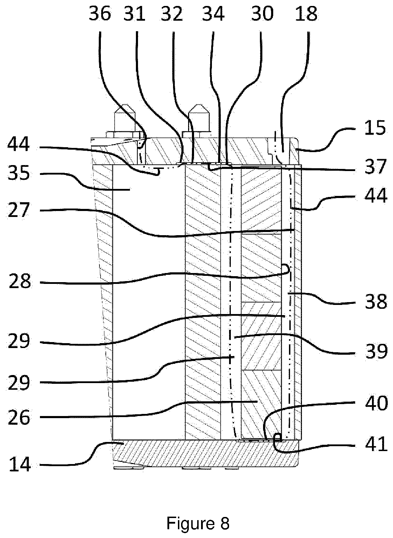

La figure 8 représente une coupe partielle en plans sécants du rotor 3 selon le premier mode de réalisation de l'invention. La coupe est réalisée selon un tracé 33 représenté sur la figure 7.

Cette coupe permet de montrer un trajet 44 suivi par la résine 64 et le gaz lors de l'insertion de la résine 64 dans l'espace de fixation 29.

La figure 9 représente une coupe partielle en plans sécants du rotor 3 selon le deuxième mode de réalisation de l'invention. La coupe est, comme celle de la figure 8, réalisée selon un tracé 33 représenté sur la figure 7.

Le deuxième mode de réalisation de l'invention est similaire au premier mode de réalisation de l'invention. Cependant la réalisation du premier ensemble de maintien 15 et du deuxième ensemble de maintien 14 est différente.

Dans le deuxième mode de réalisation de l'invention, le premier ensemble de maintien 15 peut comprendre une première partie d'extrémité 45 et une première partie intermédiaire 46 de forme plate. La première partie intermédiaire 46 est par exemple réalisée dans une tôle. La première partie intermédiaire 46 est par exemple serrée entre la première partie d'extrémité 45 et le corps de rotor 16. Le premier passage comprend une première ouverture 47 traversant une épaisseur de la première partie intermédiaire 46. La première ouverture 47 est par exemple réalisée par découpe.

De même le deuxième ensemble de maintien 14 peut comprendre une deuxième partie d'extrémité 48 et une deuxième partie intermédiaire 49 de forme plate. La deuxième partie intermédiaire 49 est par exemple réalisée dans une tôle. La deuxième partie intermédiaire 49 est par exemple serrée entre la deuxième partie d'extrémité 25 et le corps de rotor 16. Le deuxième passage 40 comprend une deuxième ouverture 50 traversant une épaisseur de la deuxième partie intermédiaire 49. La deuxième ouverture 50 réalisée par découpe.

Dans un autre mode de réalisation de l'invention non représenté, le premier ensemble de maintien est tel que celui décrit pour le premier mode de réalisation de l'invention et le deuxième ensemble de maintien est tel que celui décrit pour le deuxième mode de réalisation de l'invention.

Dans un autre mode de réalisation de l'invention non représenté, le premier ensemble de maintien est tel que celui décrit pour le deuxième mode de réalisation de l'invention et le deuxième ensemble de maintien est tel que celui décrit pour le premier mode de réalisation de l'invention.

Dans un autre mode de réalisation non représenté de l'invention, le premier ensemble de maintien ne comprend pas d'évent. L'évacuation du gaz peut alors se faire par remonté naturelle du gaz en surface de la résine, notamment sous une forme de bulles.

Dans un autre mode de réalisation non représenté de l'invention, le deuxième ensemble de maintien ne comprend pas de deuxième passage. L'évacuation du gaz peut alors se faire par remonté naturelle du gaz en surface de la résine ou grâce à un espace libre ménagé entre l'aimant permanant et le deuxième ensemble de maintien.

## Revendications

1. Rotor (3) pour machine électrique tournante (1), apte à interagir avec un stator (2) de la machine électrique tournante (1) et en rotation par rapport à un axe de rotation (A), le rotor (3) comprenant :
- un corps de rotor (16) comprenant :
- des premières cavités (23) s'étendant d'une première extrémité (24) du corps de rotor (16) à une deuxième extrémité (25) du corps de rotor (16) dans la direction de l'axe de rotation (A),
- des troisièmes cavités (21) s'étendant de la première extrémité (24) du corps de rotor (16) à la deuxième extrémité (25) du corps de rotor (16) dans la direction de l'axe de rotation (A) et ayant un axe parallèle à l'axe de rotation (A),
- des aimants permanents (26) se logeant dans les premières cavités (23), un espace de fixation (29) étant formé entre au moins une première face (28) d'au moins un des aimants permanents (26) et une deuxième face (27) de l'une des premières cavités (23) dans laquelle l'au moins un aimant permanents (26) est logé,
- un premier ensemble de maintien (15) en appui sur la première extrémité (24) du corps de rotor (16) et comprenant des deuxièmes trous (20),
- un deuxième ensemble de maintien (14) en appui sur la deuxième extrémité (25) du corps de rotor (16),
- des tirants (17), passant dans les troisièmes cavités (21) et dans les deuxièmes trous (20) du premier ensemble de maintien (15), permettant d'enserrer le corps de rotor (16) entre le premier ensemble de maintien (15) et le deuxième ensemble de maintien (14),
- une résine (64) insérée dans l'espace de fixation (29),
dans lequel le premier ensemble de maintien (15) comprend un passage d'alimentation (18) communiquant avec l'espace de fixation (29), le passage d'alimentation (18) étant apte à recevoir un dispositif d'alimentation en résine,
**caractérisé en ce que** le premier ensemble de maintien (15) comprend un lamage (60) ayant un fond, le fond comprenant le passage d'alimentation (18) et une surface d'appui (55) plane sur laquelle s'appuie le tirant (17),
le passage d'alimentation (18) et la surface d'appui (55) ayant un bord (56) en commun de manière à ne laisser aucune matière du premier ensemble de maintien (15) entre une partie du tirant (17) reposant sur la surface plane d'appui et le passage d'alimentation (18).

2. Rotor (3) selon l'une des revendications précédentes dans lequel le deuxième ensemble de maintien (14) comprend des troisièmes trous (22) dans lesquels passent les tirants (17).

3. Rotor (3) selon l'une des revendications précédentes dans lequel le passage d'alimentation (18) étant inscrit entre un premier plan (57) et un deuxième plan (58) formant un secteur angulaire (59), le premier plan (57) et le deuxième plan (58) passant par l'axe de rotation (A), l'un des deuxièmes trous (20) est situé dans le secteur angulaire (59).

4. Rotor (3) selon l'une des revendications 1 à 2 dans lequel le passage d'alimentation (18) étant inscrit entre un premier plan (57) et un deuxième plan (58) formant un secteur angulaire (59), le premier plan (57) et le deuxième plan (58) passant par l'axe de rotation (A), l'un des deuxièmes trous (20) ayant un axe (60), l'axe (60) est situé dans le secteur angulaire (59).

5. Rotor (3) selon l'une des revendications précédentes dans lequel le passage d'alimentation (18) communique avec plusieurs espaces de fixations (29), notamment deux.

6. Rotor (3) selon l'une des revendications précédentes dans lequel le premier ensemble de maintien (15) comprend un évent (32) communiquant avec l'espace de fixation (29) et apte à permettre l'évacuation d'un gaz lors de l'insertion de la résine (64), le passage d'alimentation (18) et l'évent (32) étant distincts.

7. Rotor (3) selon l'une des revendications précédentes dans lequel les tirants comprennent un élément de fixation (61), l'élément de fixation étant en appui sur la surface d'appui (55).

8. Rotor (3) selon la revendication précédente dans lequel le tirant (17) est une vis et l'élément de fixation est une tête de la vis, la tête de la vis étant en appui sur la surface d'appui (55).

9. Rotor (3) selon la revendication 7 dans lequel le tirant (17) comprend une vis (63) et l'élément de fixation est un écrou (62), l'écrou (62) étant en appui sur la surface d'appui (55).

10. Machine électrique tournante (1) comprenant un rotor (3) selon l'une des revendications précédentes et un stator (2).

## Patentansprüche

1. Rotor (3) für eine umlaufende elektrische Maschine (1), der geeignet ist, mit einem Stator (2) der umlaufenden elektrischen Maschine (1) zu interagieren, und in Bezug auf eine Rotationsachse (A) rotiert, wobei der Rotor (3) umfasst:
- einen Rotorkörper (16), umfassend:
- erste Hohlräume (23), die sich von einem ersten Ende (24) des Rotorkörpers (16) zu einem zweiten Ende (25) des Rotorkörpers (16) in der Richtung der Rotationsachse (A) erstrecken,
- dritte Hohlräume (21), die sich von dem ersten Ende (24) des Rotorkörpers (16) zu dem zweiten Ende (25) des Rotorkörpers (16) in der Richtung der Rotationsachse (A) erstrecken und eine zu der Rotationsachse (A) parallele Achse aufweisen,
- Permanentmagnete (26), die in den ersten Hohlräumen (23) aufgenommen sind, wobei ein Fixierungsraum (29) zwischen mindestens einer ersten Seite (28) mindestens eines der Permanentmagnete (26) und einer zweiten Seite (27) eines der ersten Hohlräume (23), in dem der mindestens eine Permanentmagnet (26) aufgenommen ist, gebildet wird,
- eine erste Halteanordnung (15), die in Anlage auf dem ersten Ende (24) des Rotorkörpers (16) ist und zweite Löcher (20) umfasst,
- eine zweite Halteanordnung (14), die auf dem zweiten Ende (25) des Rotorkörpers (16) aufliegt,
- Zugstäbe (17), die in den dritten Hohlräumen (21) und in den zweiten Löchern (20) der ersten Halteanordnung (15) verlaufen und es ermöglichen, den Rotorkörper (16) zwischen der ersten Halteanordnung (15) und der zweiten Halteanordnung (14) einzuspannen,
- ein Harz (64), das in den Fixierungsraum (29) eingeführt ist,
wobei die erste Halteanordnung (15) einen Versorgungsdurchgang (18) umfasst, der mit dem Fixierungsraum (29) in Verbindung steht, wobei der Versorgungsdurchgang (18) geeignet ist, eine Vorrichtung zur Versorgung mit Harz aufzunehmen,
**dadurch gekennzeichnet, dass** die erste Halteanordnung (15) eine Senkung (60) umfasst, die einen Boden aufweist, wobei der Boden den Versorgungsdurchgang (18) und eine plane Anlagefläche (55) umfasst, auf welcher der Zugstab (17) aufliegt, wobei der Versorgungsdurchgang (18) und die Anlagefläche (55) einen gemeinsamen Rand (56) besitzen, so dass kein Material der ersten Halteanordnung (15) zwischen einem Teil des Zugstabs (17), der auf der ebenen Anlagefläche ruht, und dem Versorgungsdurchgang (18) gelassen wird.

2. Rotor (3) nach einem der vorhergehenden Ansprüche, wobei die zweite Halteanordnung (14) dritte Löcher (22) umfasst, in denen die Zugstäbe (17) verlaufen.

3. Rotor (3) nach einem der vorhergehenden Ansprüche, wobei, wenn der Versorgungsdurchgang (18) zwischen einer ersten Ebene (57) und einer zweiten Ebene (58), die einen Winkelsektor (59) bilden, einbeschrieben ist, wobei die erste Ebene (57) und die zweite Ebene (58) durch die Rotationsachse (A) verlaufen, eines der zweiten Löcher (20) in dem Winkelsektor (59) gelegen ist.

4. Rotor (3) nach einem der Ansprüche 1 bis 2, wobei, wenn der Versorgungsdurchgang (18) zwischen einer ersten Ebene (57) und einer zweiten Ebene (58), die einen Winkelsektor (59) bilden, einbeschrieben ist, wobei die erste Ebene (57) und die zweite Ebene (58) durch die Rotationsachse (A) verlaufen, wobei eines der zweiten Löcher (20) eine Achse (60) aufweist, die Achse (60) in dem Winkelsektor (59) gelegen ist.

5. Rotor (3) nach einem der vorhergehenden Ansprüche, wobei der Versorgungsdurchgang (18) mit mehreren Fixierungsräumen (29), insbesondere zwei, in Verbindung steht.

6. Rotor (3) nach einem der vorhergehenden Ansprüche, wobei die erste Halteanordnung (15) eine Entlüftungsöffnung (32) umfasst, die mit dem Fixierungsraum (29) in Verbindung steht und geeignet ist, das Abführen eines Gases beim Einführen des Harzes (64) zu ermöglichen, wobei der Versorgungsdurchgang (18) und die Entlüftungsöffnung (32) verschieden sind.

7. Rotor (3) nach einem der vorhergehenden Ansprüche, wobei die Zugstäbe ein Fixierungselement (61) umfassen, wobei das Fixierungselement auf der Anlagefläche (55) in Anlage ist.

8. Rotor (3) nach dem vorhergehenden Anspruch, wobei der Zugstab (17) eine Schraube ist und das Fixierungselement ein Kopf der Schraube ist, wobei der Kopf der Schraube auf der Anlagefläche (55) in Anlage ist.

9. Rotor (3) nach Anspruch 7, wobei der Zugstab (17) eine Schraube (63) umfasst und das Fixierungselement eine Mutter (62) ist, wobei die Mutter (62) auf der Anlagefläche (55) in Anlage ist.

10. Umlaufende elektrische Maschine (1), die einen Rotor (3) nach einem der vorhergehenden Ansprüche und einen Stator (2) umfasst.

## Claims

1. Rotor (3) for a rotary electric machine (1), able to interact with a stator (2) of the rotary electric machine (1) and rotating with respect to an axis of rotation (A), the rotor (3) comprising:
- a rotor body (16) comprising:
- first cavities (23) extending from a first end (24) of the rotor body (16) to a second end (25) of the rotor body (16) in the direction of the axis of rotation (A),
- third cavities (21) extending from the first end (24) of the rotor body (16) to the second end (25) of the rotor body (16) in the direction of the axis of rotation (A) and having an axis parallel to the axis of rotation (A),
- permanent magnets (26) housed in the first cavities (23), a fixing space (29) being formed between at least a first face (28) of at least one of the permanent magnets (26) and a second face (27) of one of the first cavities (23) in which the at least one permanent magnet (26) is housed,
- a first retaining assembly (15) bearing against the first end (24) of the rotor body (16), and comprising second holes (20),
- a second retaining assembly (14) bearing against the second end (25) of the rotor body (16),
- tie rods (17), passing through the third cavities (21) and through the second holes (20) in the first retaining assembly (15), so that the rotor body (16) can be clamped between the first retaining assembly (15) and the second retaining assembly (14),
- a resin (64) introduced into the fixing space (29), wherein the first retaining assembly (15) comprises a supply passage (18) communicating with the fixing space (29), the supply passage (18) being able to receive a resin supply device,
**characterized in that** the first retaining assembly (15) comprises a counterbore (60) having a bottom, the bottom comprising the supply passage (18) and a planar bearing surface (55) on which the tie rod (17) bears, the supply passage (18) and the bearing surface (55) having an edge (56) in common so as to leave no material of the first retaining assembly (15) between a portion of the tie rod (17) resting on the planar bearing surface and the supply passage (18).

2. Rotor (3) according to one of the preceding claims, wherein the second retaining assembly (14) comprises third holes (22) through which the tie rods (17) pass.

3. Rotor (3) according to one of the preceding claims, wherein, with the supply passage (18) being inscribed between a first plane (57) and a second plane (58) forming an angular sector (59), the first plane (57) and the second plane (58) passing through the axis of rotation (A), one of the second holes (20) is located in the angular sector (59).

4. Rotor (3) according to one of Claims 1 to 2, wherein, with the supply passage (18) being inscribed between a first plane (57) and a second plane (58) forming an angular sector (59), the first plane (57) and the second plane (58) passing through the axis of rotation (A), one of the second holes (20) having an axis (60), the axis (60) is located in the angular sector (59).

5. Rotor (3) according to one of the preceding claims, wherein the supply passage (18) communicates with several fixing spaces (29), notably with two.

6. Rotor (3) according to one of the preceding claims wherein the first retaining assembly (15) comprises a vent (32) communicating with the fixing space (29) and designed to permit the venting of gas upon insertion of the resin (64), the supply passage (18) and the vent (32) being separate.

7. Rotor (3) according to one of the preceding claims, wherein the tie rods comprise a fixing element (61), the fixing element bearing on the bearing surface (55).

8. Rotor (3) according to the preceding claim, wherein the tie rod (17) is a screw and the fixing element is a head of the screw, the head of the screw bearing on the bearing surface (55).

9. Rotor (3) according to Claim 7 wherein the tie rod (17) comprises a screw (63) and the fixing element is a nut (62), the nut (62) bearing against the bearing surface (55).

10. Rotary electric machine (1) comprising a rotor (3) according to one of the preceding claims and a stator (2).
